# EUROPÄISCHE PATENTSCHRIFT

(11) **EP 3 387 405 B1**
(45) Veröffentlichungstag und Bekanntmachung des Hinweises auf die Patenterteilung: **22.04.2020**
(21) Anmeldenummer: 16808649.4
(22) Anmeldetag: 08.12.2016
(51) Int. Cl.: G01L 9/00, F02M 65/00

(54) **VORRICHTUNG ZUR NICHT INTRUSIVEN MESSUNG DES DRUCKS EINES FLUIDS**
DEVICE FOR THE NON-INTRUSIVE MEASUREMENT OF THE PRESSURE OF A FLUID
DISPOSITIF DE MESURE NON INTRUSIVE DE LA PRESSION D'UN FLUIDE

(30) Priorität: 09.12.2015 DE 102015121425
(43) Veröffentlichungstag der Anmeldung: 17.10.2018
(73) Patentinhaber: ABB Schweiz AG, 5400 Baden (CH)
(72) Erfinder: GASCH, Armin, 67346 Speyer (DE); SZÁSZ, Paul, 68723 Plankstadt (DE)
(74) Vertreter: Maiwald Patent- und Rechtsanwaltsgesellschaft mbH
(86) Internationale Anmeldenummer: PCT/EP2016/080226
(87) Internationale Veröffentlichungsnummer: WO 2017/097888

(56) Entgegenhaltungen:
- EP-A1- 0 720 006
- JP-U- S5 363 267
- US-B2- 7 093 496

## Beschreibung

Die Erfindung bezieht sich auf eine Druckmessvorrichtung zur Bestimmung des Drucks eines innerhalb einer zylindrischen Ummantelung angeordneten Fluids, mit mindestens einem Sensor, womit eine darauf wirkende Kraft ermittelt werden kann, und mit einer Klammer zur umlaufenden Anbringung an der Ummantelung, wobei der Sensor innerhalb der Klammer angeordnet und damit wirkverbunden ist.

Das Einsatzgebiet der Erfindung betrifft viele industrielle Bereiche, wie die Prozessleittechnik, aber auch auf nicht-industrielle Gebiete wie die Überwachung von Gas- oder Wasserleitungen in der Bautechnik. Häufig werden dabei Sensoren verwendet, die intrusiv oder invasiv durch eine jeweilige Ummantelung des zu messenden Fluids geführt werden, beispielsweise durch eine Leitung, die einen Fluidfluss führt, oder durch ein Behältnis, welches ein Fluid speichert, wobei die Ummantelung zumindest stückweise zylindrisch, oft mit einem kreisrunden oder ovalen Querschnitt, ausgebildet ist.

Das Einführen eines Sensors durch eine entsprechende Öffnung in das Fluid hinein ist allerdings mit Nachteilen behaftet. Auch das Anbringen einer geeigneten Öffnung in der Ummantelung ist oft nur aufwendig durchführbar. Auch ist die Messmembran des Drucksensors oft durch einen mit Öl gefüllten hydraulischen Kreislauf von dem Prozess getrennt, weshalb aufgrund thermischer Expansion des Öls der praktikable Temperaturbereich des Sensors oft stark eingeschränkt ist.

### Stand der Technik

Aus dem allgemein bekannten Stand der Technik gehen aus diesem Grund nicht intrusive oder nichtinvasive Druckmessanordnungen hervor, bei denen eine Klammer außen an der Ummantelung, beispielsweise um die Leitung herum, unter Spannung angebracht ist, und wobei in der Klammer ein Kraftsensor angeordnet ist. Wenn sich nun die Ummantelung aufgrund von ansteigendem oder abfallendem Druck verformt, so ist diese Verformung über eine auf den Sensor wirkende Kraft messbar.

Aus der US 7,093,496 B2 geht eine nicht intrusive Druckmessanordnung hervor, bei welcher eine prinzipiell kreisrunde Schelle durch ein Verbindungsmittel geschlossen wird, welches einen Kraftsensor aufweist. Dieses Verbindungsmittel liegt nicht in dem Umfang der prinzipiell kreisrunden Schelle, sondern ist demgegenüber radial nach außen versetzt. Wenn die Schelle nun durch Expansion der Leitung, an der sie angebracht ist, auseinander gedrückt wird, so erfährt das Verbindungsmittel mit dem Kraftsensor nicht nur eine axial entlang des Verbindungsmittels laufende Kraft, sondern auch eine senkrecht dazu orientierte Belastung durch welche das Verbindungsmittel geknickt oder gebogen wird. Dadurch entsteht insbesondere eine nichtlineare Beanspruchung des Kraftsensors, so dass dieser effektiv fehlerhafte Werte liefert.

Aus der EP 0 720 006 B1 gehen ein Verfahren und eine Vorrichtung zur Messung von Druckschwankungen eines Fluids in einer zylindrischen Rohrleitung hervor, wobei ebenfalls Kraftsensoren einem Verbindungsmittel zugeordnet sind, welches radial beabstandet von dem ansonsten im Wesentlichen kreisrunden Aufbau der Vorrichtung angeordnet sind. Auch hier entsteht eine nichtlineare Beanspruchung der Kraftsensoren und somit eine fehlerhafte Auswertung des Drucks.

Eine weitere Vorrichtung zur Messung des Drucks in einer zylindrischen Leitung ist in JP S53-63267 U dargestellt und Dokument GB 2 249534 A zeigt eine Kette zur Messung von mechanischen Spannungen.

### Aufgabe und Lösung

Es ist die Aufgabe der Erfindung, eine Vorrichtung zur nicht intrusiven Messung des Drucks eines Fluids mit erhöhter Genauigkeit zur Verfügung zu stellen.

Diese Aufgabe wird erfindungsgemäß gelöst durch eine Druckmessvorrichtung gemäß dem Oberbegriff des Hauptanspruchs in Verbindung mit dessen kennzeichnenden Merkmalen. Die nachfolgenden abhängigen Ansprüche geben vorteilhafte Weiterbildungen der Erfindung wieder.

### Gegenstand der Erfindung

Die Erfindung schließt die technische Lehre ein, dass die Klammer eine umlaufende Gelenkkette von an endseitigen Gelenken schwenkbar aneinander gekoppelten Kettengliedern und ein mit einem ersten Kettenglied und einem letzten Kettenglied zusammenwirkendes Verschlussmittel aufweist.

Durch diese Art der Anordnung kann der innerhalb der Klammer untergebrachte Kraftsensor sehr nah und innerhalb des Umfangs der Klammer, in deren Ausrichtung die zu messende Kraft wirkt, angeordnet werden. Dadurch kann verhindert werden, dass die Expansion der Ummantelung aufgrund von Scherkräften nichtlinear auf den Kraftsensor übertragen wird, oder dass dieser geknickt oder gebogen wird. Die Ausrichtung der Klammer folgt umlaufend prinzipiell der Kontur der Ummantelung, soweit diese konvex ist.

Bevorzugt ist dabei, dass das Verschlussmittel als Spannmittel zum Schließen und Verspannen der Gelenkkette ausgebildet ist.

Somit ist es einfach, die Druckmessvorrichtung an eine Ummantelung anzubringen, indem die offene Gelenkkette um die Ummantelung herum geführt und am Verschlussmittel verbunden und gegebenenfalls durch einen entsprechenden Mechanismus verspannt wird. Durch Verspannung der Klammer mit einer vordefinierten Spannkraft wird gewährleistet, dass Verformungen der Ummantelung unmittelbar darauf übertragen werden.

Ein weiterer Vorteil ist darin zu sehen, dass durch die modulare Bauweise der Klammer in Form von schwenkbar miteinander gekoppelten Kettengliedern Ummantelungen von prinzipiell jeder beliebigen konvexen Geometrie nahezu formschlüssig umschließbar sind. Somit eignet sich die Druckmessvorrichtung nicht nur für kreisrunde Ummantelungen, sondern auch für ovale oder anders geformte, auch eckige, Ummantelungen.

Ganz besonders bevorzugt ist eine Variante der Erfindung, bei welcher der mindestens eine Sensor als Kraftmessbolzen ausgebildet ist und in mindestens einem Gelenk angeordnet und damit als Schwenkbolzen wirkverbunden ist.

Dadurch wird vorteilhafterweise gewährleistet, dass der Kraftsensor unmittelbar und linear die durch Verformung der Ummantelung ausgelösten Kräfte innerhalb der Klammer misst. Dieser Vorteil ist insbesondere überraschend, weil der Ort der Anordnung des Kraftsensors innerhalb der Klammer intuitiv zweitrangig sein sollte. Gerade die Kombination der Anordnung innerhalb eines Gelenks und der Wirkung sowohl als Kraftsensor als auch als Schwenkbolzen für dieses Gelenk führt zu diesem überraschenden Vorteil.

Bevorzugt ist der mindestens eine Kraftmessbolzen in einem mittig angeordneten Kettenglied der Gelenkkette angeordnet. Mit mittig ist dabei die Mitte zwischen dem ersten und dem letzten Kettenglied gemeint. Zwischen diesen beiden Kettengliedern ist das Verschlussmittel angeordnet. Sollten weitere Kettenglieder abseits des letzten Kettenglieds vorhanden sein, so sind diese nicht Teil der Klammer. Der Kraftmessbolzen befindet sich also bei geschlossener Kette in etwa gegenüber von dem Verschlussmittel. Der Vorteil dabei kann darin gesehen werden, dass eventuelle Kraftspitzen oder Asymmetrien in der Belastung innerhalb der Klammer, die durch den Schließmechanismus des Verschlussmittels, insbesondere wenn dieses als Spannmittel ausgebildet ist, über die maximale Entfernung, nämlich die halbe Länge der Gelenkkette, abgeschwächt werden, und sich durch die symmetrische Anordnung außerdem ausgleichen.

Besonders bevorzugt ist eine Gelenkkette, die mindestens drei Kettenglieder aufweist. Ab drei, vier oder mehr Kettengliedern ist es möglich, alle in der Praxis auftretenden geometrischen Veränderungen der Ummantelung auf die Klammer zu übertragen und durch den Sensor zu messen.

Insbesondere bevorzugt sind Klammern, deren Gelenkkette mindestens acht Kettenglieder aufweist. Ab acht oder mehr, vorzugsweise gleich langen, Kettengliedern können kreisrunde oder ovale oder elliptische Ummantelungen sehr konturgetreu abdecken.

Die Kettenglieder sind dabei bevorzugt spiegelsymmetrisch über die Ebene ausgebildet, in der die Rotationsachsen der beiden Gelenkrollen des Kettengliedes liegen. Eine solche Bauweise ist im Stand der Technik üblich und bewirkt eine hohe mechanische Belastbarkeit eines jeden Kettengliedes.

Besonders bevorzugt ist weiter, dass die Gelenkkette als Bolzenkette ausgebildet ist. Eine solche Bauweise ist besonders einfach, auch lässt sich insbesondere gegebenenfalls der Sensor in Form eines Kraftmessbolzens sehr einfach als Bolzen zwischen zwei Kettengliedern anordnen, wo dieser dann unmittelbar mit den zur Lagerung des Bolzens vorgesehenen Aufnahmen zweier Kettenglieder zusammenwirkt.

In einer bevorzugten Ausführungsform der Erfindung ist das Verschlussmittel als Spannbolzen ausgebildet, durch welchen das erste Kettenglied mit dem letzten Kettenglied lösbar verbunden wird. Dadurch lässt sich vorteilhafterweise die Klammer mit wenigen Handgriffen manuell befestigen und wieder ablösen.

Weiter bevorzugt ist, dass das Spannmittel über mindestens ein Schraubelement verfügt, zur manuell einstellbaren Verspannung des Spannmittels. Dadurch kann vorteilhafterweise bei der Anbringung der Klammer durch Verstellen des Schraubelements, beispielsweise einer Mutter, die Kraft eingestellt werden, mit welcher die Klammer um die Ummantelung herum vorgespannt wird.

### Spezieller Beschreibungsteil

Nachfolgend wird der Gegenstand der Erfindung anhand einer einzigen Figur näher erläutert, ohne dass der Gegenstand der Erfindung hierdurch beschränkt wird. Es ist gezeigt:

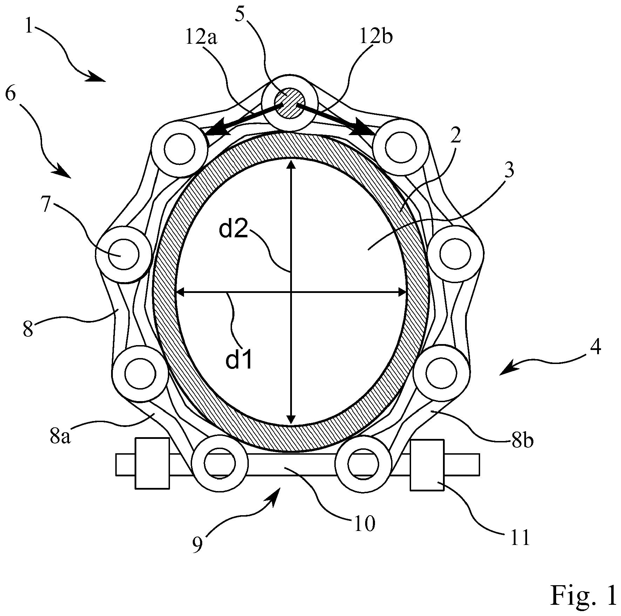

- Figur 1: schematisierte Frontalansicht auf eine erfindungsgemäße Druckmessvorrichtung an einer ovalen Ummantelung.

In Figur 1 ist eine Druckmessvorrichtung **1** zur Messung des Drucks eines innerhalb einer zylindrischen Ummantelung **2** angeordneten Fluids **3** gezeigt. Die Ummantelung **2** ist Teil einer elliptischen Rohrleitung mit der Hauptachse **d2** und der Nebenachse **d1.**

Durch den Druck des in der Ummantelung **2** angeordneten Fluids **3** wird dabei die zylindrische Ummantelung **2** gegebenenfalls deformiert. Um die Ummantelung **2** anliegend ist eine Klammer **4** angeordnet, in der ein als Kraftmessbolzen ausgebildeter Sensor **5** angeordnet und damit wirkverbunden ist. Eine innerhalb der Klammer **4** wirkende Kraft wird also durch den Sensor 5 aufgenommen und liefert Rückschlüsse auf den Druck des Fluids **3.**

Die Klammer **4** weist eine umlaufende, als Bolzenkette ausgebildete Gelenkkette **6** auf, welche aus an endseitigen Gelenken **7** schwenkbar aneinander gekoppelten Kettengliedern **8** besteht. Das erste Kettenglied **8a** und das letzte Kettenglied **8b** wirken dabei mit einem der Klammer **4** zugeordneten Verschlussmittel **9** zusammen.

Das Verschlussmittel **9** ist als Spannmittel zum Schließen und Verspannen der Gelenkkette **6** ausgebildet und weist einen Spannbolzen **10** und ein Schraubelement **11** in Form einer Mutter auf, wodurch die Klammer **4** manuell geschlossen und gespannt werden kann.

Der Sensor **5** ist als Kraftmessbolzen **12** ausgebildet und in einem Gelenk **7** zwischen zwei Kettengliedern **8** angeordnet, die in der Mitte der Gelenkkette **6,** also bei geschlossener Klammer **4** gegenüberliegend vom Verschlussmittel **9** angeordnet sind. Die entlang der Ausrichtung der Gelenkkette **6** gerichtete Kraft **12a; 12b** kann somit linear und ohne Knicken oder Verbiegen, insbesondere ohne parasitäre und die Messung verfälschende Scherkräfte, mit dem als Kraftmessbolzen ausgebildeten Sensor 5 gemessen werden. Nicht dargestellt ist eine Recheneinheit zur Auswertung des Messsignals des Sensors **5.**

Die als Bolzenkette ausgebildete Gelenkkette **6** weist dabei acht Kettenglieder **8** auf, wodurch dem ovalen Querschnitt der Ummantelung **2** konturgetreu gefolgt werden kann.

Die Erfindung ist nicht beschränkt auf das vorstehend beschriebene Ausführungsbeispiel. Es sind auch weitere Ausführungsformen möglich, die vom Schutzbereich der nachfolgenden Ansprüche mit umfasst sind. So ist es auch möglich, das weniger als acht, beispielsweise drei oder vier Kettenglieder, oder sehr viel mehr Kettenglieder, beispielsweise sechszehn oder mehr, verwendet werden. Durch Verwendung von wenigen Kettengliedern kann ein einfacher Aufbau oder durch Verwendung von vielen Kettengliedern ein sehr konturgetreuer Formschluss der Gelenkkette mit der Ummantelung erreicht werden.

Es ist auch denkbar, mehrere Sensoren, die beispielsweise als Kraftmessbolzen ausgebildet sind, vorzusehen, um Redundanzen zu schaffen und die Genauigkeit der Messung zu erhöhen.

Auch denkbar ist, dass die Gelenkkette nicht als Bolzenkette, sondern beispielsweise als Buchsenkette oder Rollenkette ausgebildet ist. Wenn der Sensor als Kraftmessbolzen ausgebildet ist, ist dann jedoch immer noch besonders zu bevorzugen, dass der Kraftmessbolzen als Bolzen zur schwenkbaren Verbindung zweier Kettenglieder unmittelbar mit diesen wirkverbunden ist, so dass die in der Gelenkkette wirkende Kraft am Kraftmessbolzen angreift, und nicht an einer diesen umgebenden Buchse.

Auch ist möglich, dass das Verschlussmittel nicht mit Hilfe einer Bolzenstange und eines Schraubelements, sondern beispielsweise mit einem verzahnten Riegel verschließbar und verspannbar ist.

### Bezugszeichenliste

- 1: Druckmessvorrichtung
- 2: Ummantelung
- 3: Fluid
- 4: Klammer
- 5: Sensor
- 6: Gelenkkette
- 7: Gelenk
- 8: Kettenglied
- 8a: erstes Kettenglied
- 8b: letztes Kettenglied
- 9: Verschlussmittel
- 10: Spannbolzen
- 11: Schraubelement
- d1: Nebenachse
- d2: Hauptachse

## Patentansprüche

1. Druckmessvorrichtung (1) zur Bestimmung des Drucks eines innerhalb einer zylindrischen Ummantelung (2) angeordneten Fluids (3), mit mindestens einem Sensor (5), womit eine darauf wirkende Kraft ermittelbar ist, und mit einer Klammer (4) zur umlaufenden Anbringung an der Ummantelung (2), wobei der Sensor (5) innerhalb der Klammer (4) angeordnet und damit wirkverbunden ist, wobei die Klammer (4) eine umlaufende Gelenkkette (6) von an endseitigen Gelenken (7) schwenkbar aneinander gekoppelten Kettengliedern (8) und ein mit einem ersten Kettenglied (8a) und einem letzten Kettenglied (8b) zusammenwirkendes Verschlussmittel (9) aufweist
**dadurch gekennzeichnet,**
**dass** der mindestens eine Sensor (5) als Kraftmessbolzen ausgebildet ist und in mindestens einem Gelenk (7) angeordnet und damit als Schwenkbolzen wirkverbunden ist.

2. Druckmessvorrichtung (1) nach Anspruch 1,
**dadurch gekennzeichnet,**
**dass** das Verschlussmittel (9) als Spannmittel zum Schließen und Verspannen der Gelenkkette (6) ausgebildet ist.

3. Druckmessvorrichtung (1) nach Anspruch 1,
**dadurch gekennzeichnet,**
**dass** der mindestens eine als Kraftmessbolzen ausgebildete Sensor (5) in einem Gelenk (7) von zwei mittig angeordneten Kettengliedern (8) der Gelenkkette (6) angeordnet ist.

4. Druckmessvorrichtung (1) nach einem der vorherigen Ansprüche,
**dadurch gekennzeichnet,**
**dass** die Gelenkkette (6) mindestens drei Kettenglieder (8) aufweist.

5. Druckmessvorrichtung (1) nach einem der vorherigen Ansprüche,
**dadurch gekennzeichnet,**
**dass** die Gelenkkette (6) mindestens acht Kettenglieder (8) aufweist.

6. Druckmessvorrichtung (1) nach einem der vorherigen Ansprüche,
**dadurch gekennzeichnet,**
**dass** die Gelenkkette (6) als Bolzenkette ausgebildet ist.

7. Druckmessvorrichtung (1) nach einem der vorherigen Ansprüche,
**dadurch gekennzeichnet,**
**dass** die Kettenglieder (8) spiegelsymmetrisch über die Ebene ausgebildet sind, in der die Rotationsachsen der beiden endseitigen Gelenke (7) liegen.

8. Druckmessvorrichtung (1) nach einem der vorherigen Ansprüche,
**dadurch gekennzeichnet,**
**dass** das Verschlussmittel (9) einen Spannbolzen (10) zum lösbaren Verbinden des ersten Kettenglieds (8a) mit dem letzten Kettenglied (8b) aufweist.

9. Druckmessvorrichtung nach Anspruch 2,
**dadurch gekennzeichnet,**
**dass** das als Spannmittel ausgebildete Verschlussmittel (9) über mindestens ein Schraubelement (11) zur manuell einstellbaren Verspannung des Spannmittels verfügt.

## Claims

1. Pressure measurement device (1) for determining the pressure of a fluid (3) arranged within a cylindrical shell (2), having at least one sensor (5) by which a force acting thereon is able to be determined, and having a clamp (4) for peripheral attachment to the shell (2), wherein the sensor (5) is arranged within the clamp (4) and operatively connected thereto, wherein the clamp (4) has a peripheral link chain (6) of chain links (8) which are coupled pivotably to one another at end-side joints (7), and has a closure means (9) which interacts with a first chain link (8a) and a last chain link (8b),
**characterized**
**in that** the at least one sensor (5) is in the form of a force measurement bolt, and is arranged in at least one joint (7) and operatively connected as a pivot bolt thereto.

2. Pressure measurement device (1) according to Claim 1,
**characterized**
**in that** the closure means (9) is in the form of a clamping means for the closure and bracing of the link chain (6).

3. Pressure measurement device (1) according to Claim 1,
**characterized**
**in that** the at least one sensor (5) in the form of a force measurement bolt is arranged in a joint (7) of two centrally arranged chain links (8) of the link chain (6).

4. Pressure measurement device (1) according to one of the preceding claims,
**characterized**
**in that** the link chain (6) has at least three chain links (8).

5. Pressure measurement device (1) according to one of the preceding claims,
**characterized**
**in that** the link chain (6) has at least eight chain links (8).

6. Pressure measurement device (1) according to one of the preceding claims,
**characterized**
**in that** the link chain (6) is in the form of a bolt chain.

7. Pressure measurement device (1) according to one of the preceding claims,
**characterized**
**in that** the chain links (8) are formed to be mirror-symmetrical with respect to the plane in which the axes of rotation of the two end-side joints (7) lie.

8. Pressure measurement device (1) according to one of the preceding claims,
**characterized**
**in that** the closure means (9) has a clamping bolt (10) for the releasable connection of the first chain link (8a) to the last chain link (8b).

9. Pressure measurement device according to Claim 2,
**characterized**
**in that** the closure means (9) in the form of a clamping means has at least one screw element (11) for the manually settable bracing of the clamping means.

## Revendications

1. Dispositif de mesure de pression (1) pour déterminer la pression d'un fluide (3) disposé à l'intérieur d'une gaine cylindrique (2), comprenant au moins un capteur (5), avec lequel une force agissant sur celui-ci peut être déterminée, comprenant une pince (4) devant être montée sur la périphérie de la gaine (2), le capteur (5) étant disposé à l'intérieur de la pince (4) et étant en liaison fonctionnelle avec celle-ci, la pince (4) présentant une chaîne d'articulation périphérique (6) constituée de maillons (8) accouplés les uns aux autres et pouvant pivoter au niveau d'articulations (7) du côté de l'extrémité, et un moyen de fermeture (9) coopérant avec un premier maillon (8a) et un dernier maillon (8b),
**caractérisé en ce que**
l'au moins un capteur (5) est réalisé sous forme d'axe dynamométrique et est disposé dans au moins une articulation (7) et est en liaison fonctionnelle avec celle-ci sous forme d'axe pivotant.

2. Dispositif de mesure de pression (1) selon la revendication 1,
**caractérisé en ce que**
le moyen de fermeture (9) est réalisé sous forme de moyen de serrage pour fermer et serrer la chaîne d'articulation (6).

3. Dispositif de mesure de pression (1) selon la revendication 1,
**caractérisé en ce que**
l'au moins un capteur (5) réalisé sous forme d'axe dynamométrique est disposé dans une articulation (7) de deux maillons (8) de la chaîne d'articulation (6) disposés centralement.

4. Dispositif de mesure de pression (1) selon l'une quelconque des revendications précédentes,
**caractérisé en ce que**
la chaîne d'articulation (6) présente au moins trois maillons (8).

5. Dispositif de mesure de pression (1) selon l'une quelconque des revendications précédentes,
**caractérisé en ce que**
la chaîne d'articulation (6) présente au moins huit maillons (8).

6. Dispositif de mesure de pression (1) selon l'une quelconque des revendications précédentes,
**caractérisé en ce que**
la chaîne d'articulation (6) est réalisée sous forme de chaîne à rouleaux.

7. Dispositif de mesure de pression (1) selon l'une quelconque des revendications précédentes,
**caractérisé en ce que**
les maillons (8) sont réalisés avec une symétrie spéculaire sur le plan dans lequel sont situés les axes de rotation des deux articulations (7) du côté de l'extrémité.

8. Dispositif de mesure de pression (1) selon l'une quelconque des revendications précédentes,
**caractérisé en ce que**
le moyen de fermeture (9) présente un boulon de serrage (10) pour la connexion amovible du premier maillon (8a) au dernier maillon (8b).

9. Dispositif de mesure de pression selon la revendication 2,
**caractérisé en ce que**
le moyen de fermeture (9) réalisé sous forme de moyen de serrage dispose d'au moins un élément de vis (11) pour le serrage ajustable manuellement du moyen de serrage.
